# DEMANDE DE BREVET EUROPEEN

(11) **EP 2 436 540 A1**
(43) Date de publication de la demande: **04.04.2012**
(21) Numéro de dépôt: 11182874.5
(22) Date de dépôt: 27.09.2011
(51) Int. Cl.: B60D 1/30, B60D 1/36, B60D 1/58, B62D 13/06, B62D 15/02

(54) **Ensemble de détermination de la position angulaire d'un véhicule à tracter relativement à un véhicule tracteur**

(30) Priorité: 04.10.2010 FR 1058007
(71) Demandeur: Jtekt Europe, 69540 Irigny (FR)
(72) Inventeur: Pantale, David, 69126 Brindas (FR)
(74) Mandataire: Chevalier, Renaud Philippe

(57) **Abrégé**

Cet ensemble comporte des moyens de télémétrie conçus pour émettre et recevoir au moins une paire de signaux télémétriques, le véhicule à tracter (1) étant adapté pour réfléchir la ou les paires de signaux télémétriques, des moyens de traitement de la ou des paires de signaux télémétriques réfléchis par le véhicule à tracter (1) et reçus par les moyens de télémétrie, des moyens de calcul de la position angulaire du véhicule à tracter (1) relativement au véhicule tracteur (2) à partir de la ou des paires de signaux télémétriques traités par les moyens de traitement, des moyens de mesure de l'angle de l'angle du volant (4) du véhicule tracteur (2), les moyens de traitement étant destinés à coopérer avec lesdits moyens de mesure de manière à calibrer la ou les paires de signaux télémétriques reçus par les moyens de traitement.

## Description

La présente invention se rapporte à un ensemble de détermination de la position angulaire d'un véhicule à tracter relativement à un véhicule tracteur.

Par « véhicule à tracter », on entend un véhicule notamment de type caravane ou remorque.

Par « véhicule tracteur », on entend un véhicule adapté pour tracter un véhicule à tracter.

La détermination de la position angulaire d'un véhicule à tracter relativement à un véhicule tracteur est une des conditions importantes afin d'envisager une assistance à la conduite du véhicule tracteur, par exemple pour le recul, ou encore la stabilisation active du véhicule à tracter en situation de roulage.

A cet effet, il est connu de l'état de la technique d'utiliser un capteur angulaire disposé à proximité d'une rotule d'attelage sur un dispositif d'accrochage du véhicule à tracter au véhicule tracteur.

Il est également connu de l'état de la technique d'utiliser un capteur linéaire sur le dispositif d'accrochage.

De tels capteurs de l'état de la technique doivent être rajoutés lors de l'accrochage du véhicule à tracter au véhicule tracteur. En outre, il est nécessaire de prévoir une connexion électrique de ces capteurs au véhicule tracteur ainsi qu'une gestion des éventuelles pertes de connexion.

Par ailleurs, il est de plus en plus courant d'équiper le véhicule tracteur de moyens de télémétrie permettant notamment d'assister un conducteur pour le recul du véhicule tracteur seul. Les moyens de télémétrie sont conçus pour émettre et recevoir des signaux télémétriques afin de mesurer la distance entre le véhicule tracteur et un objet environnant. Lorsque le véhicule à tracter est attelé au véhicule tracteur, les moyens de télémétrie sont alors rendus inopérants pour l'aide au recul.

La présente invention vise à remédier en tout ou partie aux inconvénients précités et concerne un ensemble de détermination de la position angulaire d'un véhicule à tracter relativement à un véhicule tracteur, l'ensemble étant remarquable en ce qu'il comporte :
- des moyens de télémétrie conçus pour émettre et recevoir au moins une paire de signaux télémétriques, les moyens de télémétrie étant destinés à équiper le véhicule tracteur, le véhicule à tracter étant adapté pour réfléchir la ou les paires de signaux télémétriques,
- des moyens de traitement de la ou des paires de signaux télémétriques réfléchis par le véhicule à tracter et reçus par les moyens de télémétrie,
- des moyens de calcul conçus pour calculer la position angulaire du véhicule à tracter relativement au véhicule tracteur à partir de la ou des paires de signaux télémétriques traités par les moyens de traitement,
- des moyens de détermination de l'angle de trajectoire du véhicule tracteur comportant des moyens de mesure de l'angle de l'angle du volant du véhicule tracteur, les moyens de traitement étant destinés à coopérer avec les moyens de détermination de l'angle de trajectoire du véhicule tracteur de manière à calibrer la ou les paires de signaux télémétriques reçus par les moyens de traitement.

Ainsi, les moyens de télémétrie traités par les moyens de traitement sont employés pour mesurer la distance entre le véhicule tracteur et le véhicule à tracter. Les moyens de calcul permettent alors d'obtenir la position angulaire du véhicule à tracter relativement au véhicule à partir de ces mesures de distance.

Un tel ensemble selon l'invention permet donc de s'affranchir de capteurs disposés sur le véhicule à tracter et dédiés à la mesure de la position angulaire du véhicule à tracter relativement au véhicule tracteur. Un tel ensemble selon l'invention permet, par là-même, d'éviter de prévoir une connexion électrique de ces capteurs au véhicule tracteur ainsi qu'une gestion des éventuelles pertes de connexion en utilisant les moyens de télémétrie équipant le véhicule tracteur.

Par ailleurs, une telle calibration de la ou des paires de signaux télémétriques reçus par les moyens de traitement permet d'améliorer significativement la précision de mesure de la distance entre le véhicule tracteur et le véhicule à tracter.

Dans un mode de réalisation, le véhicule tracteur présente un plan médian longitudinal, et les moyens de télémétrie comportent au moins une paire de capteurs de distance agencés à l'arrière du véhicule tracteur sensiblement symétriquement de part et d'autre du plan médian longitudinal du véhicule tracteur, chaque capteur de distance étant conçu pour émettre et recevoir un signal télémétrique.

Ainsi, un tel agencement des capteurs de distance permet d'obtenir une couverture transversale uniforme pour les mesures de distance entre le tracteur et le véhicule à tracter.

Avantageusement, l'ensemble comporte des moyens d'alerte agencés pour coopérer avec les moyens de calcul de manière à délivrer un signal d'alerte lorsque la position angulaire du véhicule à tracter relativement au véhicule tracteur dépasse un seuil prédéterminé.

Ainsi, de tels moyens d'alerte permettent par exemple d'alerter le conducteur du véhicule afin d'éviter une mise en lacet du véhicule à tracter ou encore une mise en travers du véhicule à tracter lors d'un recul du véhicule tracteur.

De manière préférentielle, le véhicule tracteur comporte un système de contrôle de trajectoire, et le signal d'alerte est destiné à être envoyé audit système de contrôle de trajectoire.

Ainsi, le système de contrôle de trajectoire du véhicule tracteur peut tenir compte du signal d'alerte et corriger la trajectoire du véhicule tracteur de manière à éviter une mise en lacet du véhicule à tracter ou encore une mise en travers du véhicule à tracter lors d'un recul du véhicule tracteur.

Selon une forme d'exécution, le véhicule tracteur comporte un calculateur central, et les moyens de calcul sont destinés à être intégrés audit calculateur central.

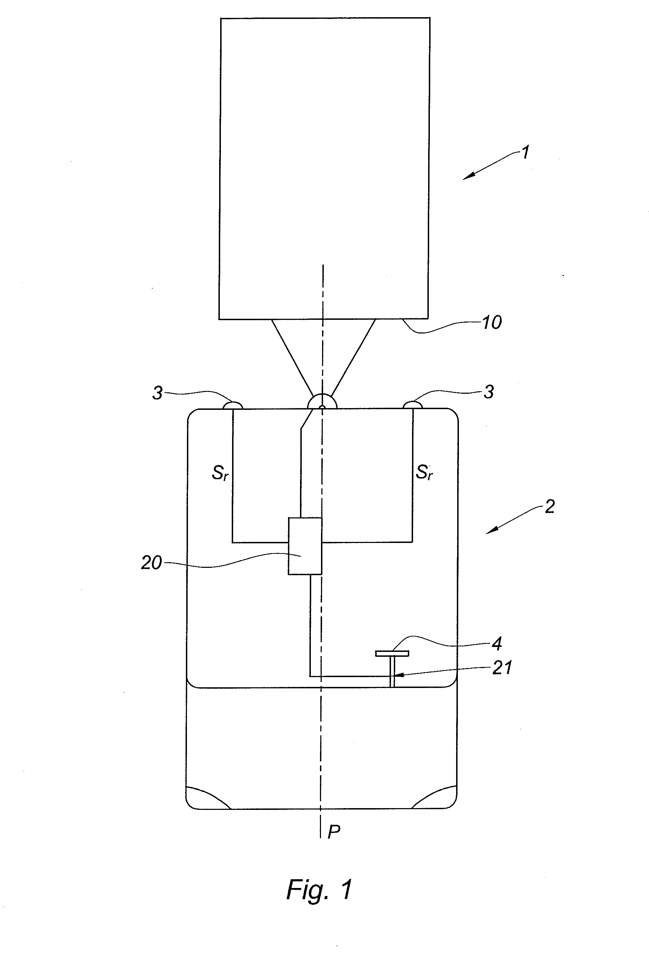

D'autres caractéristiques et avantages apparaîtront dans la description qui va suivre d'un mode de réalisation d'un ensemble de détermination de la position angulaire d'un véhicule à tracter relativement à un véhicule tracteur selon l'invention, donné à titre d'exemple non limitatif, en référence aux dessins annexés dans lesquels la figure 1 est une vue schématique d'un ensemble selon l'invention.

L'ensemble de détermination de la position angulaire d'un véhicule à tracter 1 relativement à un véhicule tracteur 2 illustré à la figure 1 comporte des moyens de télémétrie conçus pour émettre et recevoir une paire de signaux télémétriques. Les signaux télémétriques peuvent être notamment du type ultrasons, lasers ou encore infrarouges.

En outre, le véhicule tracteur 2 présente un plan médian longitudinal P. Par « longitudinale », on entend une direction s'étendant suivant la longueur du véhicule tracteur 2. Par ailleurs, le véhicule tracteur 2 comporte un calculateur central 20. Le véhicule tracteur 2 comporte également un capteur de mesure 21 formant des moyens de mesure de l'angle du volant 4. Le capteur de mesure 21 de l'angle du volant 4 permet de déterminer l'angle de trajectoire du véhicule tracteur 2.

Le véhicule à tracter 1 est adapté pour réfléchir la paire de signaux télémétriques. Plus précisément, le véhicule à tracter 1 présente une surface avant 10 adaptée pour réfléchir la paire de signaux télémétriques.

Les moyens de télémétrie comportent une paire de capteurs de distance 3 agencés à l'arrière du véhicule tracteur 2 sensiblement symétriquement de part et d'autre du plan médian longitudinal P du véhicule tracteur 2. Chaque capteur de distance 3 est conçu pour émettre et recevoir un signal télémétrique.

En outre, l'ensemble comporte des moyens de traitement (non représentés) de la paire de signaux télémétriques réfléchis par la surface avant 10 du véhicule à tracter 1 et reçus par les capteurs de distance 3.

Les moyens de traitement sont agencés sur le véhicule tracteur 2 pour coopérer avec le capteur de mesure 21 de l'angle du volant 4 de manière à calibrer la paire de signaux télémétriques reçus Sr par les moyens de traitement. Les moyens de traitement peuvent être intégrés au calculateur central 20 du véhicule tracteur 2.

De plus, l'ensemble comporte des moyens de calcul (non représentés) intégrés au calculateur central 20 du véhicule tracteur 2. Les moyens de calcul sont conçus pour calculer la position angulaire du véhicule à tracter 1 relativement au véhicule tracteur 2 à partir de la paire de signaux télémétriques traités par les moyens de traitement.

Lorsque le capteur de mesure 21 de l'angle du volant 4 indique un angle nul, c'est-à-dire une trajectoire rectiligne du véhicule tracteur 2, la paire de signaux télémétriques reçus Sr par les moyens de traitement sera traitée de manière à ce que les moyens de calcul obtiennent une position angulaire nulle du véhicule à tracter 1 relativement au véhicule tracteur 2. Il est à noter que cette calibration doit s'effectuer à une vitesse de roulage positive et non nulle afin d'éviter une calibration fausse.

L'ensemble comporte en outre des moyens d'alerte (non représentés) agencés pour coopérer avec les moyens de calcul de manière à délivrer un signal d'alerte lorsque la position angulaire du véhicule à tracter 1 relativement au véhicule tracteur 2 dépasse un seuil prédéterminé. Le seuil est prédéterminé de manière à éviter une mise en lacet du véhicule à tracter 1 en condition de roulage ou une mise en travers du véhicule à tracter 1 lors d'un recul du véhicule tracteur 2.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention.

## Revendications

1. Ensemble de détermination de la position angulaire d'un véhicule à tracter (1) relativement à un véhicule tracteur (2), l'ensemble étant **caractérisé en ce qu'**il comporte :
- des moyens de télémétrie conçus pour émettre et recevoir au moins une paire de signaux télémétriques, les moyens de télémétrie étant destinés à équiper le véhicule tracteur (2), le véhicule à tracter (1) étant adapté pour réfléchir la ou les paires de signaux télémétriques,
- des moyens de traitement de la ou des paires de signaux télémétriques réfléchis par le véhicule à tracter (1) et reçus par les moyens de télémétrie,
- des moyens de calcul conçus pour calculer la position angulaire du véhicule à tracter (1) relativement au véhicule tracteur (2) à partir de la ou des paires de signaux télémétriques traités par les moyens de traitement,
- des moyens de détermination de l'angle de trajectoire du véhicule tracteur (2) comportant des moyens de mesure de l'angle de l'angle du volant (4) du véhicule tracteur (2), les moyens de traitement étant destinés à coopérer avec les moyens de détermination de l'angle de trajectoire du véhicule tracteur (2) de manière à calibrer la ou les paires de signaux télémétriques reçus par les moyens de traitement.

2. Ensemble selon la revendication 1, **caractérisé en ce que** le véhicule tracteur (2) présente un plan médian longitudinal (P), et **en ce que** les moyens de télémétrie comportent au moins une paire de capteurs de distance (3) agencés à l'arrière du véhicule tracteur (2) sensiblement symétriquement de part et d'autre du plan médian longitudinal (P) du véhicule tracteur (2), chaque capteur de distance (3) étant conçu pour émettre et recevoir un signal télémétrique.

3. Ensemble selon la revendication 1 ou 2, **caractérisé en ce qu'**il comporte des moyens d'alerte agencés pour coopérer avec les moyens de calcul de manière à délivrer un signal d'alerte lorsque la position angulaire du véhicule à tracter (1) relativement au véhicule tracteur (2) dépasse un seuil prédéterminé.

4. Ensemble selon la revendication 3, **caractérisé en ce que** le véhicule tracteur (2) comporte un système de contrôle de trajectoire, et **en ce que** le signal d'alerte est destiné à être envoyé audit système de contrôle de trajectoire.

5. Ensemble selon l'une des revendications 1 à 4, caractérisé en ce le véhicule tracteur (2) comporte un calculateur central (20), et en en ce que les moyens de calcul sont destinés à être intégrés audit calculateur central (20).
